# EUROPEAN PATENT APPLICATION

(11) **EP 4 822 088 A2**
(43) Date of publication of application: **14.10.2026**
(21) Application number: 25226223.3
(22) Date of filing: 22.12.2025
(51) Int. Cl.: D06P 5/30, C09D 11/40, D06P 1/44, D06P 1/54, D06P 1/673, D06P 3/60, D06P 5/08, D06P 5/20

(54) **COMPOSITION SET AND INK JET TEXTILE PRINTING RECORDING METHOD**

(30) Priority: 24.12.2024 JP 2024227864
(71) Applicant: Seiko Epson Corporation, Tokyo 160-8801 (JP)
(72) Inventor: CHIDATE, Kosuke, Suwa-shi, 392-8502 (JP)
(74) Representative: Lewis Silkin LLP

(57) **Abstract**

A composition set contains a textile printing ink jet ink composition and a treatment liquid composition, in which the textile printing ink jet ink composition contains a white pigment, resin particles, and water, the resin particles include resin particles having a breaking elongation of 400% or more and 1000% or less, a content of the resin particles is 6.5% by mass or more with respect to a total amount of the textile printing ink jet ink composition, and the treatment liquid composition contains particles containing an organopolysiloxane and water.

## Description

The present application is based on, and claims priority from JP Application Serial Number 2024-227864, filed December 24, 2024, the disclosure of which is hereby incorporated by reference herein in its entirety.

### BACKGROUND

### 1. Technical Field

The present disclosure relates to a composition set and an ink jet textile printing recording method.

### 2. Related Art

An ink jet method is applied not only to recording an image on paper or the like but also to textile printing on a fabric. In particular, in an ink jet textile printing using a pigment, various studies are made to improve color developing property and rub fastness of an image printed on a fabric.

For example, JP-A-2020-007543 discloses an ink for ink jet textile printing, using a urethane resin having a film elongation of 600% to 2000% in order to improve rub fastness of a printed material.

In addition, a white ink jet ink composition (hereinafter, also referred to as "white ink") may be used as a base of the image printed on a fabric. In order to improve color development and rub fastness of the image, the white ink may contain a large amount of a white pigment or a resin.

However, when a content of the pigment or the resin in the white ink is increased, fabric hand of the printed material is likely to deteriorate. In addition, when a resin having a large breaking elongation is used, the fabric hand is improved, but the rub fastness of the printed material is deteriorated. Therefore, it is difficult to achieve both the fabric hand and the rub fastness of the printed material using the white ink.

### SUMMARY

An aspect of a composition set according to the present disclosure is a composition set containing:
a textile printing ink jet ink composition; and
a treatment liquid composition,
in which the textile printing ink jet ink composition contains a white pigment, resin particles, and water,
the resin particles include resin particles having a breaking elongation of 400% or more and 1000% or less,
a content of the resin particles is 6.5% by mass or more with respect to a total amount of the textile printing ink jet ink composition, and
the treatment liquid composition contains particles containing an organopolysiloxane and water.

An aspect of a recording method according to the present disclosure is an ink jet textile printing recording method including:
an ink attachment step of attaching the above-described ink jet ink composition to a fabric by an ink jet method; and
a treatment liquid attachment step of attaching the above-described treatment liquid composition to the fabric after the ink attachment step.

### BRIEF DESCRIPTION OF THE DRAWINGS

FIG. 1 is a schematic perspective view of an ink jet textile printing apparatus configured to be applicable to a recording method according to an embodiment.
FIG. 2 is a schematic view showing an example of arrangement of ink jet heads of the ink jet textile printing apparatus.
FIG. 3 is a schematic view showing an example of the arrangement of the ink jet heads of the ink jet textile printing apparatus.
FIG. 4 is a schematic view showing an example of arrangement of ink jet heads of the ink jet textile printing apparatus.
FIG. 5 is a table (Table 1) showing formulations, conditions, and evaluation results according to Examples.

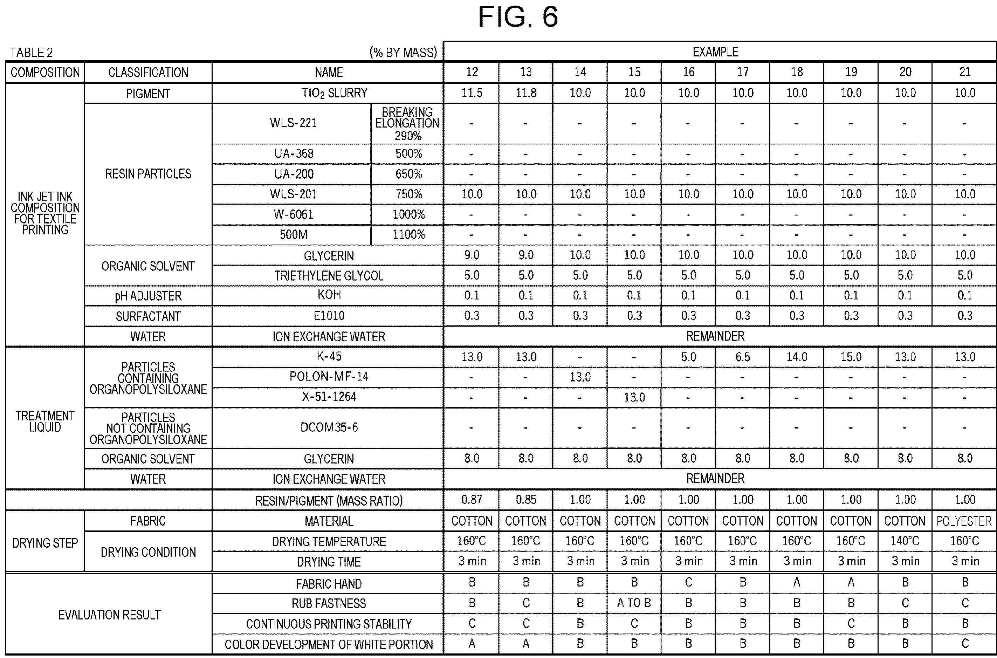

FIG. 6 is a table (Table 2) showing formulations, conditions, and evaluation results according to Examples.
FIG. 7 is a table (Table 3) showing formulations, conditions, and evaluation results according to Comparative Examples.

### DESCRIPTION OF EMBODIMENTS

Hereinafter, embodiments of the present disclosure will be described. The embodiments described below describe examples of the present disclosure. The present disclosure is not limited to the following embodiments, and includes various modifications implemented within a range not changing a gist of the present disclosure. It should be noted that not all of the configurations described below are essential configurations of the present disclosure.

In the present specification, "textile printing" refers to recording or printing of ink on a recording medium including a fabric, and is also referred to as "printing". In addition, the recording medium after the textile printing is referred to as "textile printed material" or "printed material".

In the present specification, "ink jet textile printing" refers to recording (printing) an ink composition on a recording medium including a fabric by an ink jet method.

In the present specification, a textile printing ink jet ink composition containing a white pigment may be referred to as "white ink composition". In addition, a textile printing ink jet ink composition containing a non-white pigment may be referred to as "non-white ink jet ink composition".

In the present specification, the term "white" when referring to the white ink composition, the white pigment, and the like does not refer only to perfect white, but also includes slightly colored colors with chromatic colors, achromatic colors, and glossy colors, within a range which is visible as white. For example, in CIELAB, colors with L* of 70 or more and a* and b* of ±10 or less, respectively, are preferable. Furthermore, colors with L* of 80 or more and a* and b* of ±50 or less, respectively, are more preferable.

In the present specification, a notation of "(meth)acrylic" means at least one of acrylic or methacrylic.

### 1. Composition set

The composition set according to the embodiment of the present disclosure contains a textile printing ink jet ink composition and a treatment liquid composition. The composition set according to the present embodiment may further contain a non-white ink jet ink composition.

In the composition set according to the present embodiment, the textile printing ink jet ink composition and the treatment liquid composition may be used as a set in a case of recording, and are not limited to a case in which the textile printing ink jet ink composition and the treatment liquid composition are manufactured, sold, or the like in an integrated state. As a premise, the textile printing ink jet ink composition and the treatment liquid composition are contained in the set as the textile printing ink jet ink composition and the treatment liquid composition are intended to be used in combination, or as the textile printing ink jet ink composition and the treatment liquid composition are substantially induced to be used in combination.

Hereinafter, the composition and the like, contained in the composition set according to the present embodiment, will be described.

### 1.1. Textile printing ink jet ink composition

The textile printing ink jet ink composition according to the present embodiment contains a white pigment, resin particles, and water.

Hereinafter, components contained in the textile printing ink jet ink composition according to the present embodiment will be described in detail.

### 1.1.1. White pigment

The textile printing ink jet ink composition according to the present embodiment contains a white pigment. Examples of the white pigment include metal compounds such as metal oxide, barium sulfate, and calcium carbonate. Examples of the metal oxide include titanium dioxide, zinc oxide, silica, alumina, and magnesium oxide. In addition, particles having a hollow structure may be used for the white pigment. As the particles having a hollow structure, known particles can be used.

Examples of the white pigment include C.I. Pigment White 1, 4, 5, 6, 6:1, 7, 18, 19, 20, 21, 22, 26, 27, and 28.

A content of the white pigment is preferably 7.0% by mass or more, more preferably 7.5% by mass or more, still more preferably 8.0% by mass or more, and particularly preferably 8.3% by mass or more with respect to the total amount of the textile printing ink jet ink composition. When the content of the white pigment is equal to or more than the above-described range, as the white ink composition is used as a base for printing the non-white ink composition, hiding property of the base is improved, and white color developing property is improved. In addition, the content of the white pigment is preferably 13.0% by mass or less, more preferably 12.0% by mass or less, and still more preferably 11.8% by mass or less. When the content of the white pigment is equal to or less than the above-described range, rub fastness of a printed material is improved, and continuous printing stability during printing is improved.

The white pigment may be dispersed in a dispersion medium using a pigment dispersant. Examples of the pigment dispersant include a resin dispersant, and the pigment dispersant is selected from those that can improve dispersion stability of the pigment in the ink composition. In addition, the pigment may also be used as a self-dispersing pigment by modifying the surface of the pigment particles by oxidizing or sulfonating the pigment surface with, for example, ozone, hypochlorous acid, fuming sulfuric acid, or the like.

### 1.1.2. Resin particles

The textile printing ink jet ink composition according to the present embodiment contains resin particles.

As the content of the pigment is increased, the white ink composition tends to have deteriorated rub fastness. In order to improve the rub fastness, it is preferable to increase a content of the resin particles together with the content of the pigment.

A content (w2) of the resin particles with respect to the content (w1) of the white pigment is preferably 0.5 or more, more preferably 0.6 or more, and still more preferably 0.7 or more in terms of a mass ratio (w2/w1). When the mass ratio of the content of the resin particles to the content of the white pigment is equal to or more than the above-described range, the content of the resin particles is an amount sufficient with respect to the content of the white pigment, and thus the rub fastness of the printed material is improved. In addition, the above-described mass ratio is preferably 1.5 or less, more preferably 1.4 or less, and still more preferably 1.3 or less.

The content of the resin particles is preferably 6.5% by mass or more, more preferably 7.0% by mass or more, and still more preferably 7.5% by mass or more with respect to the total amount of the textile printing ink jet ink composition. When the content of the resin particles is equal to or more than the above-described range, the printed material exhibits favorable rub fastness and maintains fabric hand. Since the printed material tends to have deteriorated fabric hand as the content of the resin is too large, the content of the resin particles is preferably 11.5% by mass or less, more preferably 10.5% by mass or less, and still more preferably 10.0% by mass or less. When the content of the resin particles is equal to or less than the above-described range, a viscosity of the ink composition is suitable, and the continuous printing stability during printing is improved. In addition, the fabric hand can be improved.

When both resin particles having a breaking elongation of 400% or more and 1000% or less and resin particles not having a breaking elongation of 400% or more and 1000% or less are contained as the resin particles, the total content thereof may be 6.5% by mass or more, but it is preferable that the content of the resin particles having a breaking elongation of 400% or more and 1000% or less is 6.5% by mass or more.

The breaking elongation of the resin particles contained in the textile printing ink jet ink composition also affects the fabric hand of the printed material using the printing ink jet composition. The breaking elongation of the resin particles can be measured by a tensile test using a test piece in a film shape of the resin particles, which will be described later. When the breaking elongation of the resin particles is large, a coating film of the ink composition can follow expansion and contraction of a fabric as a recording medium, and thus the fabric hand of the printed material is not impaired.

Therefore, the textile printing ink jet ink composition according to the present embodiment contains resin particles having a breaking elongation of 400% or more, preferably 500% or more, more preferably 650% or more, and particularly preferably 670% or more. By containing the resin particles having a breaking elongation in the above-described range in the textile printing ink jet ink composition according to the present embodiment, a printed material having excellent rub fastness and maintaining the fabric hand can be obtained. On the other hand, when the breaking elongation is too large, the rub fastness tends to deteriorate, and thus the breaking elongation of the resin particles is preferably 1000% or less, and more preferably 990% or less.

### Measurement of breaking elongation of resin particles

The breaking elongation of the resin particles refers to a breaking elongation of a resin film test piece produced from the resin particles. The breaking elongation of the resin particles is measured by the following method.

The resin particles are applied onto a silicone resin sheet such that a film thickness after drying is set to 400 µm, drying is performed at a heating temperature of 120°C for 15 minutes, and then the resin film is peeled off from the silicone resin sheet to obtain a resin film. The obtained resin film is cut into a rectangle having a width of 2 cm and a length of 4 cm to produce a resin film test piece. Using the produced resin film test piece, a breaking elongation and a tensile strength are measured. In the measurement, a Tensilon universal tester RTC-1225A (manufactured by ORIENTEC CO., LTD.) is used. Using the above-described tester, the resin film test piece is stretched and pulled at a measurement temperature of 20°C and a measurement speed of 150 mm/min, and a length (breaking length) until breaking is measured. A proportion (%) of the breaking length to the original length of the resin film test piece is defined as the breaking elongation.

A volume average particle diameter of the resin particles is preferably 10 nm or more and 300 nm or less, more preferably 30 nm or more and 300 nm or less, still more preferably 30 nm or more and 250 nm or less, and particularly preferably 40 nm or more and 220 nm or less.

The volume average particle diameter of the resin particles can be measured by a particle size distribution measuring device using a dynamic light scattering method as a measurement principle. Examples of the particle size distribution measuring device include "MICROTRAC UPA" (manufactured by Nikkiso Co., Ltd.).

Examples of a material of the resin particles according to the present embodiment include a urethane-based resin, an acrylic resin (including a styrene-acrylic resin), a fluorene-based resin, a polyolefin-based resin, a rosin-modified resin, a terpene-based resin, a polyester-based resin, a polyamide-based resin, an epoxy-based resin, a vinyl chloride-based resin, a vinyl chloride-vinyl acetate copolymer, and an ethylene vinyl acetate-based resin. These resin particles are often handled in a form of an emulsion, but may be in a form of powder. In addition, the resin particles may be used alone or in combination of two or more types thereof.

The resin particles are more preferably a urethane-based resin. By using the urethane-based resin, a printed material having excellent rub fastness can be obtained.

Examples of the urethane-based resin include a polyether-type urethane-based resin having an ether bond in a main chain, a polyester-type urethane-based resin having an ester bond in a main chain, and a polycarbonate-type urethane-based resin having a carbonate bond in a main chain, the resins having a urethane bond. The urethane-based resin may be synthesized by a known method or may be a commercially available product. Examples of the commercially available product of the urethane-based resin include PERMARIN (registered trademark) UA-368 and UA-200 (both product names manufactured by Sanyo Chemical Industries, Ltd.), HYDRAN (registered trademark) WLS-201 (product name manufactured by DIC Corporation), and TAKELAC (registered trademark) W-6061 (product name manufactured by Mitsui Chemicals, Inc.).

The acrylic resin is a polymer obtained by polymerizing at least one component of an acrylic monomer such as (meth)acrylic acid and (meth)acrylic acid ester, and examples thereof include a resin obtained from the acrylic monomer, and a copolymer of the acrylic monomer and a monomer other than the acrylic monomer. Examples of the acrylic monomer and the monomer other than the acrylic monomer include an acrylic-vinyl-based resin which is a copolymer of an acrylic monomer and a vinyl-based monomer. Examples of the vinyl-based monomer include styrene.

As the acrylic monomer, acrylamide, acrylonitrile, or the like can also be used.

The styrene-acrylic resin is a copolymer obtained from a styrene monomer and a (meth)acrylic monomer, and examples thereof include a styrene-acrylic acid copolymer, a styrene-methacrylic acid copolymer, a styrene-methacrylic acid-acrylic ester copolymer, a styrene-α-methylstyrene-acrylic acid copolymer, and a styrene-α-methylstyrene-acrylic ester copolymer. A commercially available product may be used as the styrene-acrylic resin.

The polyolefin-based resin has an olefin such as ethylene, propylene, and butylene in the structural skeleton, and known resins can be appropriately selected and used.

In addition, the above-described resin particles may be supplied in a form of emulsion, or a commercially available product of a resin emulsion may be used.

### 1.1.3. Water

The textile printing ink jet ink composition according to the present embodiment contains water.

Examples of the water include pure water such as ion exchange water, ultrafiltered water, reverse osmosis water, and distilled water, and water such as ultrapure water, from which ionic impurities are removed as much as possible. In addition, when water sterilized by irradiation with ultraviolet rays, addition of hydrogen peroxide, or the like is used, the generation of bacteria or fungi when the composition is stored for a long period of time can be prevented.

A content of the water is preferably 50% by mass or more, more preferably 60% by mass or more, and still more preferably 70% by mass or more with respect to the total amount of the textile printing ink jet ink composition.

### 1.1.4. Other Components

The textile printing ink jet ink composition according to the present embodiment may contain an organic solvent, a surfactant, a pH adjuster, a viscosity adjuster, an antioxidant, an oxygen absorber, a solubilizer, a wax, a chelating agent, a fungicide and a preservative, a rust inhibitor, or the like.

### Organic solvent

The textile printing ink jet ink composition may contain an organic solvent. The organic solvent is preferably water-soluble. Examples of a function of the organic solvent include improving wetting properties of the white ink composition on the fabric and increasing moisturizing properties of the textile printing ink jet ink composition. In addition, the organic solvent can also function as a penetrant.

Examples of the organic solvent include esters, alkylene glycol ethers, cyclic esters, nitrogen-containing solvents, and polyhydric alcohols.

Examples of the esters include glycol monoacetates such as ethylene glycol monomethyl ether acetate, ethylene glycol monoethyl ether acetate, and ethylene glycol monobutyl ether acetate, and glycol diesters such as ethylene glycol diacetate, diethylene glycol diacetate, and propylene glycol diacetate.

The alkylene glycol ethers may be alkylene glycol monoethers or diethers, and are preferably alkyl ethers. Specific examples thereof include alkylene glycol monoalkyl ethers such as ethylene glycol monomethyl ether, ethylene glycol monoethyl ether, ethylene glycol monoisopropyl ether, ethylene glycol monobutyl ether, and diethylene glycol monomethyl ether, and alkylene glycol dialkyl ethers such as ethylene glycol dimethyl ether, ethylene glycol diethyl ether, ethylene glycol dibutyl ether, diethylene glycol dimethyl ether, and diethylene glycol diethyl ether.

Examples of the cyclic esters include cyclic esters (lactones) such as β-propiolactone, γ-butyrolactone, δ-valerolactone, ε-caprolactone, and β-butyrolactone, and compounds in which a hydrogen of a methylene group adjacent to a carbonyl group thereof is substituted with an alkyl group having 1 to 4 carbon atoms.

Examples of the nitrogen-containing solvents include cyclic amides and acyclic amides. Examples of the acyclic amides include alkoxyalkylamides.

Examples of the cyclic amides include lactams, and examples thereof include pyrrolidones such as 2-pyrrolidone, 1-methyl-2-pyrrolidone, 1-ethyl-2-pyrrolidone, 1-propyl-2-pyrrolidone, and 1-butyl-2-pyrrolidone.

Examples of the alkoxyalkyl amides include 3-methoxy-N,N-dimethylpropionamide and 3-methoxy-N,N-diethylpropionamide.

Examples of the function of the nitrogen-containing solvent include enhancing the surface dryness and fixability of the coloring ink composition attached to the fabric.

Examples of the polyhydric alcohol include 1,2-alkanediols (for example, alkanediols such as ethylene glycol, propylene glycol (also known as propane-1,2-diol), 1,2-butanediol, 1,2-pentanediol, 1,2-hexanediol, 1,2-heptanediol, and 1,2-octanediol), and polyhydric alcohols (polyols) other than 1,2-alkanediols (for example, diethylene glycol, dipropylene glycol, glycerin, and the like).

Examples of the polyhydric alcohols include alkanediols and polyols. The alkanediols are preferably a diol of an alkane having 5 or more carbon atoms. The number of carbon atoms in the alkane is preferably 5 to 15, more preferably 6 to 10, and still more preferably 6 to 8. 1,2-alkanediol is preferable.

The polyols are preferably a polyol of an alkane having 4 or less carbon atoms or an intermolecular condensation product of hydroxyl groups of a polyol of an alkane having 4 or less carbon atoms. The number of carbon atoms in the alkane is preferably 2 or 3. The number of the hydroxyl groups in the molecule of the polyols is 2 or more, preferably 5 or less, and more preferably 3 or less. When the polyols are the intermolecular condensates described above, the number of intermolecular condensates is 2 or more, preferably 4 or less, and more preferably 3 or less. The polyhydric alcohols may be used alone or as a mixture of two or more types thereof.

The alkanediols and polyols can mainly function as a penetrating solvent and/or a moisturizing solvent. The alkanediols tend to have strong properties as a penetrating solvent, and the polyols tend to have strong properties as a moisturizing solvent.

When the textile printing ink jet ink composition contains an organic solvent, the organic solvent may be used alone or in combination of two or more types thereof. In addition, the total content of the organic solvent is, for example, 5% by mass or more and 50% by mass or less, preferably 10% by mass or more and 45% by mass or less, more preferably 15% by mass or more and 40% by mass or less, and still more preferably 20% by mass or more and 40% by mass or less, with respect to the total amount of the textile printing ink jet ink composition. When the content of the organic solvent is within the above range, the balance between wet spreadability and dryness is further improved, and an image with high quality is easily formed. Surfactant

The textile printing ink jet ink composition may contain a surfactant. The surfactant can adjust a surface tension of the ink composition. Specifically, for example, the surfactant has a function of adjusting wetting properties with the fabric. As the surfactant, for example, an acetylene glycol-based surfactant, a silicone-based surfactant, and a fluorine-based surfactant can be used.

When the ink composition contains a surfactant, a plurality of types of surfactants may be contained. When the ink composition contains a surfactant, a content of the surfactant is preferably 0.1% by mass or more and 2% by mass or less, more preferably 0.3% by mass or more and 1.5% by mass or less, and still more preferably 0.5% by mass or more and 1.0% by mass or less with respect to the total amount of the ink composition.

### pH adjuster

The textile printing ink jet ink composition may contain a pH adjuster for adjusting pH. The pH adjuster is not particularly limited, and examples thereof include an appropriate combination of an acid, a base, a weak acid, and a weak base. Examples of the acid and base used in combination include inorganic acids such as sulfuric acid, hydrochloric acid, and nitric acid; inorganic bases such as lithium hydroxide, sodium hydroxide, potassium hydroxide, potassium dihydrogen phosphate, disodium hydrogen phosphate, potassium carbonate, sodium carbonate, sodium hydrogen carbonate, and ammonia; organic bases such as triethanolamine, diethanolamine, monoethanolamine, tripropanolamine, triisopropanolamine, diisopropanolamine, and trishydroxymethylaminomethane (THAM); and organic acids such as adipic acid, citric acid, succinic acid, and lactic acid.

Furthermore, among the above, it is preferable that a tertiary amine such as triethanolamine and triisopropanolamine, and a carboxyl group-containing organic acid such as adipic acid, citric acid, succinic acid, and lactic acid are contained as a part or all of the pH adjuster. By using the above-described acid or base, a pH buffering effect can be obtained more stably.

### 1.1.5. Physical properties

A viscosity of the textile printing ink jet ink composition at 20°C is preferably 1.5 mPa·s or more and 15 mPa·s or less, more preferably 1.5 mPa·s or more and 7 mPa·s or less, and still more preferably 1.5 mPa·s or more and 5.5 mPa·s or less. When the viscosity of the ink composition is within the above-described range, the image can be efficiently formed as the ink composition attaches to a fabric by an ink jet method.

A surface tension of the ink composition at 25°C is 40 mN/m or less, preferably 38 mN/m or less, more preferably 35 mN/m or less, and still more preferably 30 mN/m or less. When the surface tension of the ink composition is within the above-described range, wetting spreadability on the fabric is suitable. In addition, the surface tension of the ink composition is preferably 20 mN/m or more, and more preferably 25 mN/m or more.

The surface tension can be measured by confirming the surface tension when a platinum plate is wetted with the composition in an environment of 25°C using an automatic surface tensiometer CBVP-Z (manufactured by Kyowa Interface Science, Co., Ltd.).

### 1.1.6. Production method

The textile printing ink jet ink composition is obtained by mixing the white pigment, the resin particles, the water, and other components as necessary in any order, and then removing impurities by filtration or the like as necessary. As a method of mixing each component, a method of sequentially adding the materials to a container equipped with a stirrer such as a mechanical stirrer and a magnetic stirrer, and stirring and mixing thereof is suitably used. As a filtration method, centrifugal filtration, filter filtration, or the like can be performed as necessary.

### 1.2. Treatment liquid composition

The treatment liquid composition according to the present embodiment contains particles containing an organopolysiloxane and water.

Hereinafter, components contained in the treatment liquid composition according to the present embodiment will be described in detail.

### 1.2.1. Particles containing organopolysiloxane

The treatment liquid composition according to the present embodiment contains particles containing an organopolysiloxane. The particles are not particularly limited as long as the particles contain an organopolysiloxane, and may be, for example, particles of an organopolysiloxane itself or particles in a state in which the organopolysiloxane is dispersed with an emulsifier or the like. The property of the organopolysiloxane in the particles may be a solid or a liquid. For example, when an oily organopolysiloxane is dispersed in water in the form of particles by an emulsifier, the dispersed particles correspond to particles containing organopolysiloxane.

The organopolysiloxane is a generic term for organic silicone compounds having a siloxane bond "-Si(R¹R²)-O-" as a skeleton, where a methyl group, a phenyl group, a vinyl group, an amino group, or other groups is bonded thereto as the organic groups R¹ and R². Due to the chemical formulation and the molecular weight, the organopolysiloxane exhibits oil-like (oily), rubber-like, or resin-like properties, and is referred to as silicone oil, silicone rubber, or silicone resin, respectively. The organopolysiloxane used in the treatment liquid composition according to the present embodiment is preferably a polymer compound.

The organopolysiloxane used in the treatment liquid composition according to the present embodiment is more preferably an oily compound. When the organopolysiloxane is an oily compound, the organopolysiloxane is easily stably dispersed in the form of particles in an aqueous matrix by an emulsification treatment described below.

A molecular structure of the organopolysiloxane is not particularly limited, and examples thereof include linear, branched, cyclic, grid-like, cage-like structures, and other structures. When the molecular structure of the organopolysiloxane is an acyclic structure, one or two or more groups selected from a hydrocarbon group, an alkoxy group, a hydroxyl group, a hydrogen atom, and a halogen, which may have a substituent, are usually bonded to the terminal Si atom of the molecule.

In addition, as the organopolysiloxane, those commercially available as silicone oils may be used. Examples thereof include dimethyl silicone oil, methyl phenyl silicone oil, methyl hydrogen silicone oil, polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, polyether/long-chain alkyl/aralkyl-modified silicone oil, long-chain alkyl/aralkyl-modified silicone oil, phenyl-modified silicone oil, and polyether/methoxy-modified silicone oil.

Among the examples of the organopolysiloxane described above, a nonionic silicone is preferable. Since the nonionic silicone is chemically stable, yellowing and the like of the image to be formed are reduced as compared with the ionic silicone. In addition, when the ionic silicone is used, mist generated during recording adheres to the adjacent nozzle, and the nozzle is likely to be clogged. By using the nonionic silicone, the nozzle clogging caused by the mist can be reduced, and thus the continuous printing stability can be improved.

In addition, the organopolysiloxane is more preferably dimethyl silicone. By using the nonionic dimethyl silicone, ejection during printing is further stabilized, and thus the continuous printing stability can be improved.

Examples of a commercially available product of the dimethyl silicone oil include oil-type dispersants KF-96 series (product name manufactured by Shin-Etsu Chemical Co., Ltd., dimethyl silicone).

A viscosity of the silicone at 25°C is, for example, preferably 1,000 mPa·s or less, and preferably 50 mPa·s or more, more preferably 500 mPa·s or more and 900 mPa·s or less, and still more preferably 600 mPa·s or more and 700 mPa·s or less. In addition, the base oil viscosity when the silicone is emulsified and dispersed is not particularly limited, and the upper limit is preferably 1,000,000 mm²/s or less, and more preferably 100,000 mm²/s or less, and the lower limit is preferably 10 mm²/s or more, and more preferably 100 mm²/s or more. The base oil viscosity indicates the viscosity of the base oil and is a numerical value obtained by measuring the magnitude of the internal resistance of the base oil. The higher the numerical value of the base oil viscosity, the higher the viscosity, and the smaller the numerical value of the base oil, the lower the viscosity.

The organopolysiloxane may be emulsified and blended in a particle shape (emulsified particles) by using various surfactants as an emulsifier. That is, the particles containing an organopolysiloxane may be emulsified particles containing a silicone oil. As the emulsifier in this case, for example, a nonionic surfactant, a negative ion (anionic) surfactant, a positive ion (cationic) surfactant, an amphoteric surfactant, phospholipid, or the like can be used.

A blending amount of the emulsifier when emulsifying the organopolysiloxane is preferably less than 20% by mass, more preferably 15% by mass or less, and particularly preferably 10% by mass or less with respect to the total amount of the emulsion composition.

In addition, an average particle diameter of emulsified particles of the organopolysiloxane is 2 µm or less, preferably 1 µm or less, and more preferably within a range of 0.2 to 0.8 µm.

A content of the particles containing an organopolysiloxane in the treatment liquid composition according to the present embodiment is preferably 15.0% by mass or less, more preferably 13.0% by mass or less, and still more preferably 10.0% by mass or less with respect to the total amount of the treatment liquid composition. When the content of the particles containing an organopolysiloxane is equal to or less than the above-described range, the ejection of the treatment liquid composition during printing is further stabilized, and thus the continuous printing stability can be improved. In addition, the content of the particles containing an organopolysiloxane is preferably 5.0% by mass or more, more preferably 6.0% by mass or more, and still more preferably 7.0% by mass or more. When the content of the particles containing an organopolysiloxane is equal to or more than the above-described range, the fabric hand of the printed material is further improved.

In addition, it is preferable that the content of the particles containing an organopolysiloxane with respect to the total amount of the treatment liquid composition on a mass basis is larger than the content of the resin particles with respect to the total amount of the textile printing ink jet ink composition on a mass basis. By making the content of the particles containing an organopolysiloxane on a mass basis larger than the content of the resin particles on a mass basis, the rub fastness of the printed material can be further improved.

The content of the particles containing an organopolysiloxane is preferably 90.0% by mass or more with respect to the total solid content in the treatment liquid composition. That is, 90.0% by mass or more of the solid content remaining when the treatment liquid composition is dried is preferably organopolysiloxane. The content of the particles containing an organopolysiloxane is more preferably 95.0% by mass or more, still more preferably 98% by mass or more, and particularly preferably 99.0% by mass or more with respect to the total solid content in the treatment liquid composition.

When the content of the particles containing an organopolysiloxane is 90.0% by mass or more with respect to the total solid content in the treatment liquid composition, it is easier to form a coating film having a sufficiently low refractive index, and the color development of the printed material is further improved. In addition, the ejection is stabilized when ejecting the treatment liquid composition by an ink jet method, and thus the continuous printing stability can be improved.

### 1.2.2. Water

The treatment liquid composition according to the present embodiment contains water.

Examples of the water include pure water such as ion exchange water, ultrafiltered water, reverse osmosis water, and distilled water, and water such as ultrapure water, from which ionic impurities are removed as much as possible. In addition, when water sterilized by irradiation with ultraviolet rays, addition of hydrogen peroxide, or the like is used, the generation of bacteria or fungi when the composition is stored for a long period of time can be prevented.

A content of the water is preferably 30% by mass or more, more preferably 40% by mass or more, and still more preferably 50% by mass or more with respect to the total amount of the treatment liquid composition. "water" in the treatment liquid composition includes, for example, water contained in an organopolysiloxane dispersion used as a raw material or water added thereto. When the content of the water is within the above-described range, the treatment liquid composition can have a low viscosity. In addition, the content of the water is preferably 90% by mass or less, more preferably 85% by mass or less, and still more preferably 80% by mass or less with respect to the total amount of the treatment liquid composition. 1.2.3. Other Components

The treatment liquid composition according to the present embodiment may contain a coloring material. In addition, the treatment liquid composition may contain a component contained in the textile printing ink jet ink composition as long as the function and the dispersion structure are not impaired.

### Coloring material

A content of a coloring material in the treatment liquid composition is preferably 0.1% by mass or less, and more preferably 0.01% by mass or less with respect to the total amount of the treatment liquid composition, and it is still more preferable that the treatment liquid composition does not contain the coloring material. When the treatment liquid composition contains only a small amount of the coloring material or does not contain the coloring material, the property of a low refractive index of the coating film formed by the organopolysiloxane can be further effectively extracted. That is, when the treatment liquid composition contains only a small amount of the coloring material or does not contain the coloring material, light incident into the coating film is less likely to be shielded by the coloring material, and thus the white color developing property of the textile printing ink jet ink composition can be further improved.

### 1.2.4. Physical properties

A viscosity of the treatment liquid composition at 20°C is preferably 1.5 mPa·s or more and 15 mPa·s or less, more preferably 1.5 mPa·s or more and 7 mPa·s or less, and still more preferably 1.5 mPa·s or more and 5.5 mPa·s or less. When the viscosity of the treatment liquid composition is within the above-described range, the image can be efficiently formed as the treatment liquid composition attaches to a fabric by an ink jet method.

A surface tension of the treatment liquid composition at 25°C is 40 mN/m or less, preferably 38 mN/m or less, and more preferably 35 mN/m or less. When the surface tension of the treatment liquid composition at 25°C is within the above-described range, wetting spreadability on the fabric is suitable. In addition, the surface tension of the treatment liquid composition at 25°C is preferably 20 mN/m or more, more preferably 25 mN/m or more, and still more preferably 30 mN/m or more.

### 1.2.5. Production method and use method

The treatment liquid composition is obtained by mixing the particles containing an organopolysiloxane, the water, and other components as necessary in any order, and then removing impurities by filtration or the like as necessary. As a method of mixing each component, a method of sequentially adding materials to a container equipped with a stirrer such as a mechanical stirrer and a magnetic stirrer and stirring and mixing thereof is suitably used. As a filtration method, centrifugal filtration, filter filtration, or the like can be performed as necessary.

The treatment liquid composition is used by being applied to the fabric. Examples of a method of attaching the treatment liquid composition to the fabric include an ink jet method using an ink jet recording apparatus, coating with a roller, a bar, a brush, or the like, and coating using various sprayers.

The treatment liquid composition is preferably applied by an ink jet method. By ejecting the treatment liquid composition by an ink jet method, the treatment liquid composition can be applied to a predetermined region at a predetermined attachment amount, and the treatment liquid composition can be efficiently attached.

### 1.3. Non-white ink jet ink composition

The composition set according to the present embodiment may further contain a non-white ink jet ink composition. By further containing the non-white ink jet ink composition, the composition set can also perform printing of a color image with the white ink composition as a base. In addition, by bonding the resin contained in the white ink composition and a resin contained in the non-white ink composition, the printed material is more favorably colored, and the rub fastness of the printed image is also improved.

The non-white ink jet ink composition contains a non-white pigment, resin particles, and water.

The non-white pigment contained in the non-white ink jet ink composition is a so-called color ink, and examples thereof include color pigments such as cyan, yellow, magenta, and black, and special color pigments such as pearl.

The non-white pigment may be a mixture. The pigment has excellent storage stability such as light resistance, weather resistance, and gas resistance. From these viewpoints, the pigment is preferably an organic pigment.

Specifically, as the above-described pigment, azo pigments such as an insoluble azo pigment, a condensed azo pigment, azo lake, and a chelated azo pigment, polycyclic pigments such as a phthalocyanine pigment, a perylene and perinone pigment, an anthraquinone pigment, a quinacridone pigment, a dioxane pigment, a thioindigo pigment, an isoindolinone pigment, and a quinophthalone pigment, dye chelates, dye lakes, nitro pigments, nitroso pigments, aniline black, daylight fluorescent pigments, carbon black, and the like can be used. The above-described pigments may be used alone or in combination of two or more thereof.

Specific examples of the non-white pigment are not particularly limited, and examples thereof include the following.

Examples of the black pigment include No. 2300, No. 900, MCF88, No. 33, No. 40, No. 45, No. 52, MA7, MA8, MA100, and No. 2200B (all manufactured by Mitsubishi Chemical Corporation), and Raven 5750, Raven 5250, Raven 5000, Raven 3500, Raven 1255, and Raven 700 (all manufactured by Carbon Columbia).

Examples of the yellow pigment include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

Examples of the magenta pigment include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245; and C.I. Pigment Violet 19, 23, 32, 33, 36, 38, 43, and 50.

Examples of the cyan pigment include C.I. Pigment Blue 1, 2, 3, 15, 15:1, 15:2, 15:3, 15:34, 15:4, 16, 18, 22, 25, 60, 65, and 66; and C.I. Vat blue 4 and 60.

In addition, examples of the pigment other than the magenta, the cyan, and the yellow include C.I. Pigment Green 7 and 10; C.I. Pigment Brown 3, 5, 25, and 26; and C.I. Pigment Orange 1, 2, 5, 7, 13, 14, 15, 16, 24, 34, 36, 38, 40, 43, and 63.

Examples of the pearl pigment include a pigment having pearl gloss or interference gloss such as titanium dioxide-coated mica, fish scale foil, and bismuth oxychloride.

Examples of the metallic pigment include particles consisting of a single substance or an alloy of aluminum, silver, gold, platinum, nickel, chromium, tin, zinc, indium, titanium, copper, and the like.

Suitably, the pigment can be stably dispersed in a dispersion medium, and thus a pigment dispersant may be used for dispersing the pigment.

The resin particles contained in the non-white ink jet ink composition are as described in "1.1.2. Resin particles", and thus detailed description thereof will not be repeated.

The water contained in the non-white ink jet ink composition is as described in "1.1.3. Water", and thus detailed description thereof will not be repeated.

The non-white ink jet ink composition may contain an organic solvent, a surfactant, a pH adjuster, a viscosity adjuster, an antioxidant, an oxygen absorber, a solubilizer, a wax, a chelating agent, a fungicide and a preservative, a rust inhibitor, or the like. The above-described components are as described in "1.1.4. Other components".

The production method of the non-white ink jet ink composition is as described in "1.1.6. Production method", and thus detailed description thereof will not be repeated. 2. Ink jet textile printing recording method

The composition set containing the textile printing ink jet ink composition and the treatment liquid composition described above is used for ink jet textile printing. Hereinafter, the ink jet textile printing recording method will be described.

The ink jet textile printing recording method (hereinafter, also referred to as "recording method") according to an embodiment of the present disclosure includes an ink attachment step of attaching the above-described textile printing ink jet ink composition to a fabric by an ink jet method, and a treatment liquid attachment step of attaching the above-described treatment liquid composition to the fabric after the ink attachment step.

Hereinafter, an ink jet recording apparatus used in the ink jet method and each step of the ink jet textile printing recording method will be described in order.

### 2.1. Ink jet recording apparatus

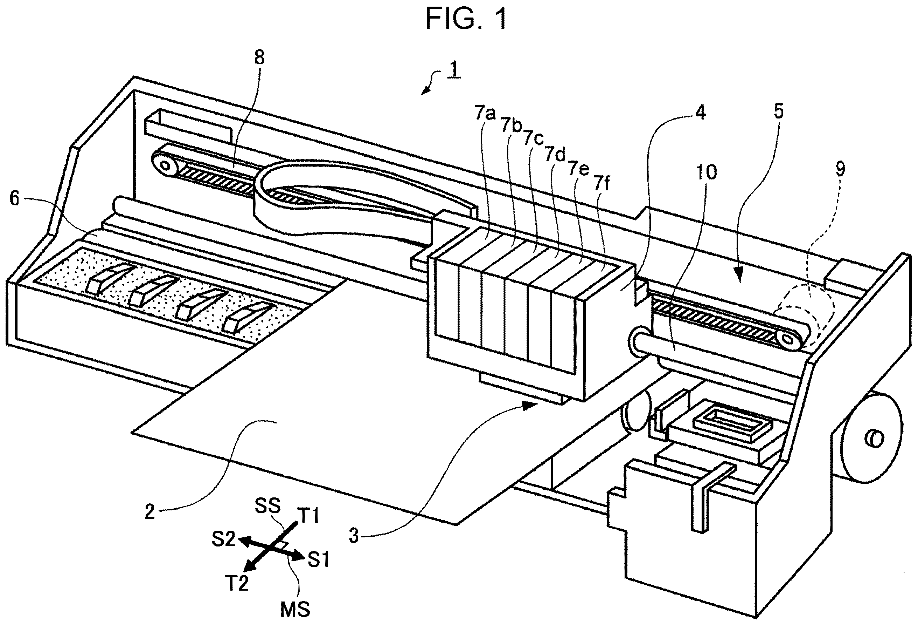

An example of the ink jet recording apparatus (hereinafter, also referred to as "recording apparatus") that can carry out the ink jet textile printing recording method according to the present embodiment will be described with reference to FIG. 1.

The recording apparatus according to the present embodiment includes an attaching mechanism that performs the ink attachment step described later and an attaching mechanism that performs the treatment liquid attachment step described later. The following description is an example in which the treatment liquid attachment step is performed by the ink jet recording apparatus, but the treatment liquid attachment step is not limited to the ink jet method using the ink jet recording apparatus.

The ink jet recording apparatus used in the following description is a serial printer in which an ink jet head for recording is mounted on a carriage that moves in a predetermined direction, and the ink jet head moves with the movement of the carriage to eject liquid droplets to the fabric. The ink jet recording apparatus that can be applied to the recording method according to the present embodiment is not limited to a serial printer, and it may be a line printer. A line printer is a type of printer in which an ink jet head is formed to be wider than the width of a fabric, and liquid droplets are ejected to the fabric without moving the ink jet head.

The ink jet recording apparatus is an apparatus for textile printing by landing liquid droplets on a fabric by an ink jet head as a liquid ejection portion that ejects minute liquid droplets of an ink composition or a reaction solution. FIG. 1 is a schematic perspective view showing the ink jet recording apparatus used in the present embodiment.

As shown in FIG. 1, a printer 1 in the present embodiment includes an ink jet head 3, a carriage 4, a main scanning mechanism 5, a platen roller 6, and a control portion (not shown) that controls the operation of the entire printer 1. The carriage 4 has the ink jet head 3 mounted thereon, and liquid cartridges 7a, 7b, 7c, 7d, 7e, and 7f which store the ink composition and the treatment liquid composition to be supplied to the ink jet head 3 and which are detachably attached.

The main scanning mechanism 5 includes a timing belt 8 coupled to the carriage 4, a motor 9 that drives the timing belt 8, and a guide shaft 10. The guide shaft 10 serves as a support member for the carriage 4 and extends in a scanning direction of the carriage 4, that is, in a main scanning direction MS. The carriage 4 is driven by the motor 9 with the timing belt 8 interposed therebetween and can reciprocate along the guide shaft 10. As a result, the main scanning mechanism 5 has a function of reciprocating the carriage 4 in the main scanning direction MS.

The platen roller 6 has a function of transporting a fabric 2 subjected to textile printing in a sub-scanning direction SS orthogonal to the main scanning direction MS, that is, in a length direction of the fabric 2. As a result, the fabric 2 is transported in the sub-scanning direction SS. The carriage 4 on which the ink jet head 3 is mounted is configured to reciprocate in the main scanning direction MS, which substantially coincides with a width direction of the fabric 2, and the ink jet head 3 is configured to relatively scan the fabric 2 in the main scanning direction MS and the sub-scanning direction SS.

The liquid cartridges 7a, 7b, 7c, 7d, 7e, and 7f are six independent liquid cartridges. The liquid cartridges 7a, 7b, 7c, 7d, 7e, and 7f can store the ink composition and the treatment liquid composition used in the recording method in the present embodiment. In these liquid cartridges, the ink compositions exhibiting colors such as black, cyan, magenta, yellow, white, and orange, and the treatment liquid composition are separately stored, and can be used in any combination. In FIG. 1, the number of liquid cartridges is set to 6, but the number is not limited thereto. At the bottom portions of the liquid cartridges 7a, 7b, 7c, 7d, 7e, and 7f, there are provided supply ports (not shown) for supplying the ink composition or the treatment liquid composition stored in each liquid cartridge to the ink jet head 3.

The ink jet head 3 is a unit that sprays the ink composition and the treatment liquid composition supplied from the liquid cartridges 7a, 7b, 7c, 7d, 7e, and 7f from a plurality of nozzles to the fabric 2 under control by the control portion (not shown) to attach the ink composition and the treatment liquid composition to the fabric 2. The ink jet head 3 is provided with the plurality of nozzles for ejecting the ink composition and the treatment liquid composition and attaching the ink composition and the treatment liquid composition to the fabric 2 to be attached on a surface facing the fabric 2 to which the ink composition and the treatment liquid composition are attached. The plurality of nozzles are arrayed in a row to form a nozzle row, and the nozzle row is individually arranged corresponding to each coloring ink composition and treatment liquid composition. Each coloring ink composition and treatment liquid composition are supplied to the ink jet head 3 from each liquid cartridge, and are ejected as liquid droplets from a nozzle by an actuator (not shown) in the ink jet head 3. When the liquid droplets of the ink composition and the treatment liquid composition ejected are land on the fabric 2 and attached to the fabric 2 is performed, an image, a text, a pattern, a color, and the like using the ink are formed in a textile printing region of the fabric 2. It is noted that a plurality of the ink jet heads 3 may be provided in the carriage 4.

Here, in the ink jet head 3, a piezoelectric element is used as an actuator which is a drive unit, but the method is not limited thereto. For example, an electromechanical conversion element that displaces a vibration plate as an actuator by electrostatic adsorption, or an electrothermal conversion element that ejects an ink composition as liquid droplets by air bubbles generated by heating may be used.

The ink jet head 3 has a nozzle group for treatment liquid composition for ejecting a treatment liquid composition and a nozzle group for ink composition for ejecting an ink composition. The nozzle group from which ejection is carried out means a nozzle group used for recording in the recording method. When there is an image to be temporarily recorded on a region of the fabric opposing the nozzle group at a time of carrying out the main scanning, the nozzle group is a nozzle group for ejecting an ink and the like from the nozzle, and a nozzle group continuous in the sub-scanning direction SS. Therefore, a nozzle group, which exists as the nozzle group itself but is not used for recording in the recording method, is not included in the ejection nozzle group.

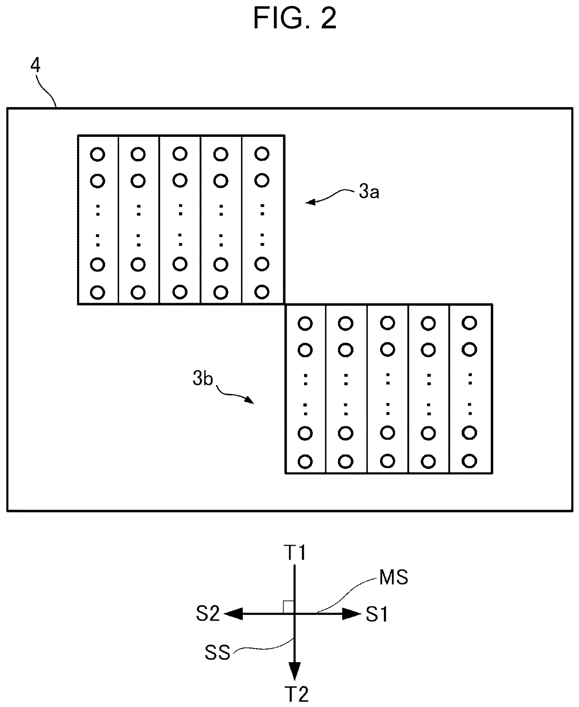

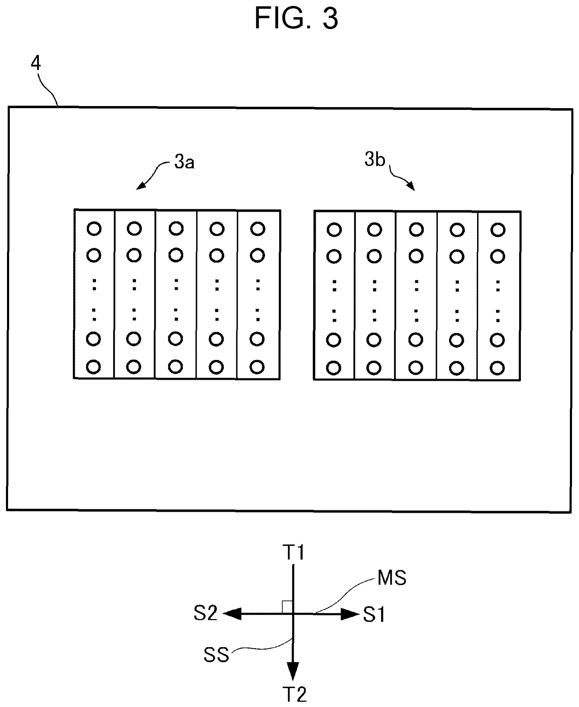

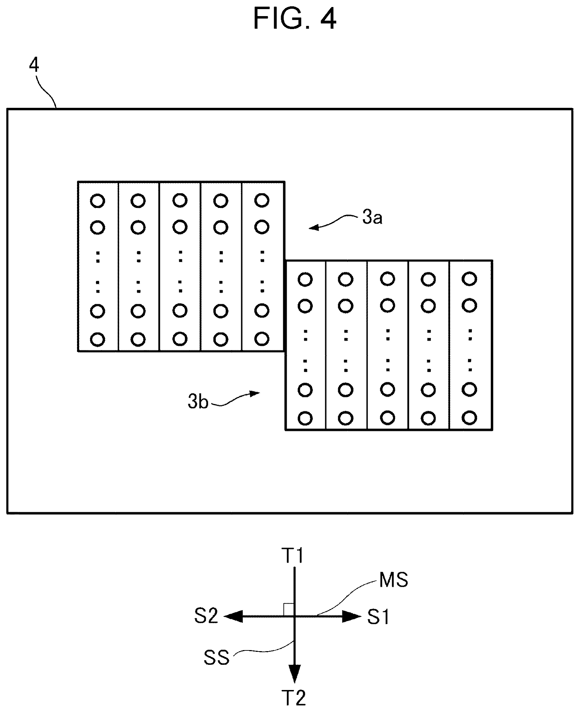

FIGS. 2, 3, and 4 show an example of the arrangement of a head of the ink jet head 3. In FIG. 2, an ink jet head 3a and an ink jet head 3b are arranged from the upstream to the downstream in the transport direction (sub-scanning direction SS). In addition, in FIG. 3, the ink jet head 3a and the ink jet head 3b are arranged at the same position in the sub-scanning direction SS, and are arranged side by side. In addition, in FIG. 4, the ink jet head 3a and the ink jet head 3b are arranged from the upstream to the downstream in the transport direction (sub-scanning direction SS), having portions overlapping each other.

In the recording method according to the present embodiment, the ink jet head 3 preferably has a configuration in which a nozzle group for treatment liquid composition used for recording is provided downstream or in an overlapping portion of the nozzle group for ink composition used for recording in the transport direction of the fabric. In addition, from the same viewpoint, preferably the head that ejects a treatment liquid composition is positioned at the same position as that of the head that ejects the ink composition with respect to the transport direction of the fabric, or is positioned downstream from the head that ejects the ink composition in the transport direction of the fabric.

With such a configuration, after the ink is attached, the treatment liquid can be attached to the same scanning region of the fabric by the same main scanning (alternate application) or after the ink is attached, the treatment liquid can be attached to the fabric by different main scanning (treatment liquid post-application). It is preferable that the ink jet ink composition and the treatment liquid are applied such that after the ink is attached to the fabric, the treatment liquid is attached to the fabric by different main scanning (treatment liquid post-application).

For example, in an example in FIG. 2, by using the ink jet head 3a as a head that ejects the ink composition and the ink jet head 3b as a head that ejects the treatment liquid composition, the nozzle group for the treatment liquid composition used for recording can be on provided downstream from the nozzle group for the ink composition used for recording in the transport direction (sub-scanning direction SS) of the fabric. In such a case, the treatment liquid composition is attached to the fabric after the ink composition. That is, the treatment liquid composition second strike can be performed, a layer containing the treatment liquid composition can be formed, and then a layer containing the ink composition can be laminated and formed.

For example, in an example in FIG. 3, when the ink jet head 3a is used as a head that ejects the ink composition, the ink jet head 3b is used as a head that ejects the treatment liquid composition, and a portion at which the nozzle group for the treatment liquid composition used for recording and a nozzle group for the ink composition used for recording overlap with each other is included, alternate strike can be performed. That is, the treatment liquid composition and the ink composition can be alternately overlapped and laminated (laminated in a form of mille-feuille).

The "overlapping portion" refers to a portion positioned at the same position in the sub-scanning direction SS, among the nozzle group for the ink composition used for recording and the nozzle group for the treatment liquid composition used for recording. With this, the ink composition and the treatment liquid composition are attached to the fabric in an overlapping manner by the same main scanning.

For example, in an example in FIG. 4, when the ink jet head 3a is used as a head that ejects the ink composition, the ink jet head 3b is used as a head that ejects the treatment liquid composition, and a portion at which the nozzle group for the treatment liquid composition used for recording and the nozzle group for the ink composition used for recording overlap each other is included, alternate strike can be performed. In addition, when the ink jet head 3a is used as a head that ejects the ink composition, the ink jet head 3b is used as a head that ejects the treatment liquid composition, a portion at which the nozzle group for the treatment liquid composition used for recording and the nozzle group for the ink composition used for recording overlap each other is not included, and a nozzle group for the treatment liquid composition used for recording is provided downstream from the nozzle group for the ink composition used for recording in the transport direction (sub-scanning direction SS) of the fabric, treatment liquid composition second strike can be performed.

### 2.2. Ink attachment step

The ink attachment step is a step of attaching the textile printing ink jet ink composition to a fabric by the ink jet method.

The ink attachment step may be performed by any method provided that an ink jet method having a form in which the ink composition is attached to a fabric with scanning the fabric by the ink jet head is used. In the ink jet method, main scanning may be performed a plurality of times for recording by moving the ink jet head in a direction perpendicular to a transport direction of the fabric.

An attachment amount of the ink composition in the ink attachment step is preferably 5.0 (mg/inch²) or more. Furthermore, the attachment amount of the ink composition is preferably 7.0 (mg/inch²) or more, more preferably 9.0 (mg/inch²) or more, still more preferably 10.0 (mg/inch²) or more, particularly preferably 13.0 (mg/inch²) or more, and most preferably 15.0 (mg/inch²) or more. When the attachment amount of the ink composition is within the above-described range, a colored image having more favorable color development can be obtained.

In addition, the attachment amount of the ink composition is preferably 50.0 (mg/inch²) or less, more preferably 40.0 (mg/inch²) or less, and still more preferably 25.0 (mg/inch²) or less.

### 2.3. Treatment liquid attachment step

The ink jet textile printing recording method according to the present embodiment includes a treatment liquid attachment step of attaching the above-described treatment liquid composition to the fabric to which the ink composition is attached, after the ink attachment step.

Hereinafter, the treatment liquid attachment step will be described.

Examples of a method of attaching the treatment liquid composition used in the treatment liquid attachment step include an ink jet method using an ink jet recording apparatus, coating with a roller, a bar, a brush, or the like, and coating using various sprayers. Among the above, the treatment liquid attachment step is preferably performed by the ink jet method. The ink jet method may be performed by any method as long as the treatment liquid composition is attached with scanning the fabric by the ink jet head.

In the ink jet method, main scanning may be performed a plurality of times for recording by moving the ink jet head in a direction perpendicular to a transport direction of the fabric. Although the details will be described later, the ink composition and the treatment liquid composition may be attached to the same scanning region of the fabric by the same main scanning, and the treatment liquid composition may be attached after the ink composition is attached (alternate coating). The ink composition and the treatment liquid composition may be applied such that, after the ink composition is attached to the fabric, the treatment liquid composition is attached to the fabric by different main scanning (treatment liquid post-coating). It is preferable that the ink jet ink composition and the treatment liquid composition are applied such that, after the ink is attached to the fabric, the treatment liquid composition is attached to the fabric by different main scanning (treatment liquid post-coating).

The treatment liquid attachment step may be performed after the ink attachment step, and for example, the treatment liquid composition may be attached onto the ink composition in the same main scanning as the main scanning of attaching the ink composition, or the treatment liquid composition may be attached onto the ink composition in subsequent main scanning different from the main scanning of attaching the ink composition. When the ink jet textile printing recording method according to the present embodiment includes a non-white ink composition attachment step described later, the treatment liquid attachment step is performed after the non-white ink composition attachment step.

It is preferable that the treatment liquid composition is attached onto the ink composition in subsequent main scanning different from the main scanning of attaching the ink composition, from the viewpoint that the drying of the ink composition progresses and the treatment liquid composition and the ink composition are less likely to be mixed. Furthermore, since the treatment liquid composition and the ink composition are less likely to be mixed, the color development of the image is less likely to be impaired.

An attachment amount of the treatment liquid composition is preferably 5 (g/m²) or more and 100 (g/m²) or less, more preferably 10 (g/m²) or more and 70 (g/m²) or less, and still more preferably 10 (g/m²) or more and 55 (g/m²) or less. When the attachment amount of the treatment liquid composition is within the above-described range, an image having more favorable color development can be obtained.

### 2.4. Drying step

The ink jet textile printing recording method according to the present embodiment may include a drying step.

The drying step can be performed by a unit that performs drying using a drying mechanism. As the part that dries the recording medium by using the drying mechanism includes a part that blows air at a normal temperature or blowing warm air to the recording medium (blast type), a part that irradiates the recording medium with radiation (infrared rays and the like) to generate heat (radiation type), a member that transmits heat to the recording medium in contact with the recording medium (conduction equation), and a combination of 2 or more of these parts. When the recording method includes the drying step, it is preferable to perform the drying step by a drying mechanism that heats the recording medium. A case in which the drying mechanism that heats the recording medium is used as the drying mechanism is particularly referred to as a heating step.

The drying step is preferably performed after the treatment liquid attachment step. When the drying step is performed after the treatment liquid attachment step, the printed material exhibits favorable rub fastness.

A temperature of the fabric at a point in time when the textile printing ink jet ink composition or the treatment liquid composition is attached is preferably 20°C or higher and 45°C or lower, more preferably 27°C or higher and 40°C or lower, and still more preferably 28°C or higher and 30°C or lower. The temperature is a surface temperature of the portion of the recording surface of the recording medium, on which liquid attachment is applied in the attachment step, and is the highest temperature of the attachment step in the recording region. When the surface temperature of the fabric is within the above-described range, the image can be printed more clearly, and favorable rub fastness is exhibited.

The method of heating the fabric is not particularly limited, and examples thereof include a heat press method, a normal pressure steam method, a high pressure steam method, a thermofix method, and other methods. A heat source when heating is carried out is not particularly limited, and for example, an infrared lamp and the like can be used. The heating temperature is preferably a temperature at which resin particles in the ink composition are fused, and a medium such as moisture volatilizes.

The heating temperature is preferably 160°C or higher, more preferably 170°C or higher, and still more preferably 180°C or higher. When the heating temperature is within the above-described range, the resin particles in the ink composition are further fixed, and the rub fastness of the printed material is further improved. In addition, the heating temperature is preferably 250°C or lower, and more preferably 200°C or lower.

A heating time is not particularly limited, but is, for example, 30 seconds or longer and 20 minutes or shorter.

When the non-white ink composition attachment step described later is further included after the treatment liquid attachment step, the drying step is preferably performed after the non-white ink composition attachment step. When the drying step is performed after the non-white ink composition attachment step, the rub fastness of the image formed onto the fabric is further improved.

### 2.5. Other steps

The ink jet textile printing recording method may include the following steps as necessary.

### 2.5.1. Pre-treatment liquid attachment step

The ink jet textile printing recording method may include a pre-treatment liquid attachment step. The pre-treatment liquid attachment step is a step of attaching a pre-treatment liquid to the fabric. Hereinafter, the pre-treatment liquid attachment step will be described.

The pre-treatment liquid used in the pre-treatment liquid attachment step may contain an aggregating agent that coagulates components of the ink jet ink composition. The aggregating agent has an effect of aggregating the pigment and the resin particles by reacting with the components such as the pigment included in the ink composition and the resin particles included in the ink composition. For example, due to such aggregation, the color development of the pigment can be enhanced, the fixability of the resin particles can be enhanced, and/or the viscosity of the ink composition can be increased.

Although the aggregating agent is not particularly limited, examples thereof include a metal salt, an inorganic acid, an organic acid, and a cationic compound, and as the cationic compound, a cationic resin (cationic polymer), a cationic surfactant, and the like can be used. Among these, a polyvalent metal salt is preferable as the metal salt, and a cationic resin is preferable as the cationic compound. Therefore, as the aggregating agent, it is preferable to select any one of a cationic resin, an organic acid, and a polyvalent metal salt from the viewpoint of obtaining particularly excellent image quality, abrasion resistance, gloss, and the like.

A content of the aggregating agent in the pre-treatment liquid is not limited, but is, for example, preferably 0.1% by mass or more and 20% by mass or less, more preferably 1% by mass or more and 20% by mass or less, and still more preferably 2% by mass or more and 15% by mass or less with respect to the total mass of the pre-treatment liquid.

The pre-treatment liquid may contain a component contained in the textile printing ink jet ink composition as long as the function thereof is not impaired.

As the method of attaching the pre-treatment liquid to the fabric, a non-contact type or contact type method such as an ink jet method using an ink jet recording apparatus, coating with a roller, a bar, a brush, or the like, and coating using various sprayers, and a method of combining these methods can be used.

The pre-treatment liquid attachment step may be performed by the ink jet method. In such a case, the viscosity at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less. When the pre-treatment liquid is attached to the recording medium by the ink jet method, the pre-treatment liquid can be applied to a predetermined region at a predetermined attachment amount, and the pre-treatment liquid can be efficiently attached.

It is preferable that the attachment of the pre-treatment liquid in the pre-treatment liquid attachment step is performed before or simultaneously with the attachment of the ink jet ink composition to the recording medium by the ink attachment step. That is, it is preferable that, by the ink attachment step, the ink composition is attached to the recording medium to which the pre-treatment liquid is attached in the pre-treatment liquid attachment step, or the attachment of the pre-treatment liquid by the pre-treatment liquid attachment step and the attachment of the ink composition by the ink attachment step are simultaneously performed. 2.5.2. Non-white ink composition attachment step

The ink jet textile printing recording method according to the present embodiment may include a non-white ink composition attachment step. The non-white ink composition attachment step is a step of attaching the non-white ink composition to the fabric by the ink jet method. By going through such a step, printing of a color image can be performed with the white ink composition as a base. The non-white ink composition attachment step is as described in "2.2. Ink attachment step".

When the ink jet textile printing recording method includes the non-white ink composition attachment step, the non-white ink composition attachment step may be performed after the ink attachment step or before the treatment liquid attachment step.

### 2.6. Fabric

A form of the fabric used in the ink jet ink textile printing recording method according to the present embodiment is not particularly limited. Examples of a material constituting the fabric include natural fibers such as cotton, hemp, wool, and silk; synthetic fibers such as polypropylene, polyester, acetate, triacetate, polyamide, and polyurethane; and biodegradable fibers such as polylactic acid. As the material of the fabric, cotton is more preferable. The fabric may be formed of these fibers alone or may be a blended fiber. The fabric may be formed of the above-described fibers in any form such as a woven fabric, a knitted fabric, and a nonwoven fabric, or may be interwoven.

As the fabric, white cloth that is not colored and cloth (hereinafter, also referred to as "colored cloth") that is colored in advance with a dye can be used. In the ink jet ink textile printing recording method according to the present embodiment, by using the colored cloth, the color developing property of the white portion is further improved, and favorable rub fastness is exhibited.

### 3. Example

Hereinafter, the present disclosure will be specifically described with reference to Examples, and the present disclosure is not limited to these Examples. "%" is based on mass unless otherwise specified.

### 3.1. Preparation of ink composition

### 3.1.1. Preparation of white ink composition

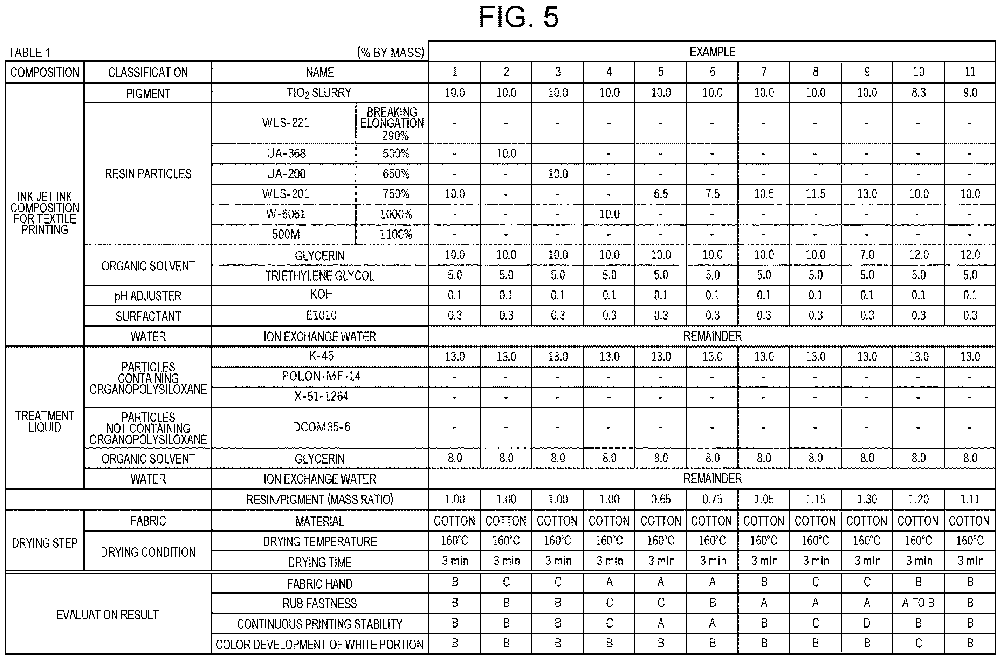

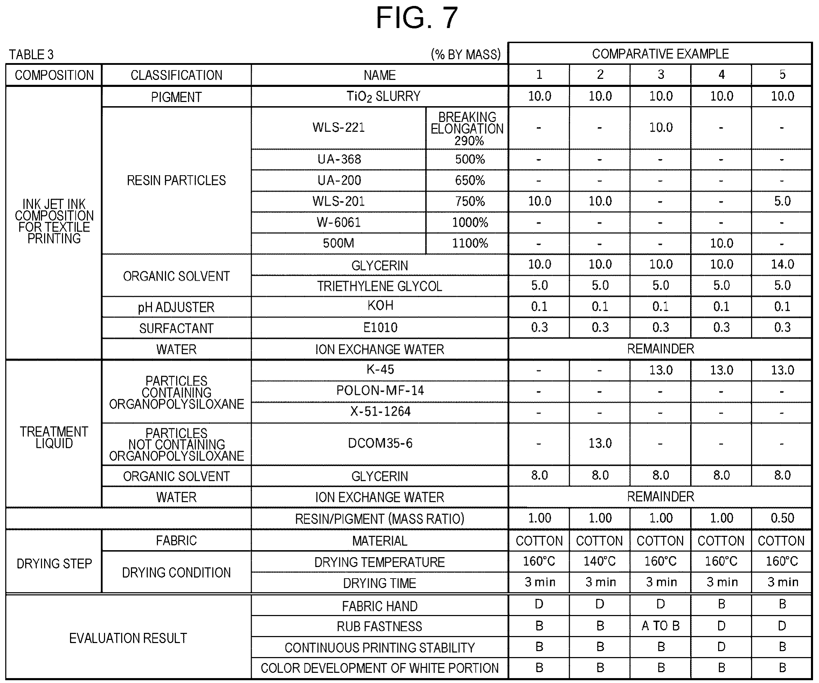

Each component was put into a container to have the formulation of Table 1 (FIG. 5) to Table 3 (FIG. 7), mixed and stirred with a magnetic stirrer for 2 hours, and then filtered through a membrane filter having a pore diameter of 5 µm to obtain a white ink composition used in each of Examples and each of Comparative Examples. Numerical values in the tables represent a content. In addition, the contents of the pigment and the resin particles in the tables represent a concentration of solid contents.

Supplementary description will be made on abbreviations and other product names shown in Tables 1 to 3.

### Resin particles

· WLS-221: product name "HYDRAN (registered trademark) WLS-221", manufactured by DIC Corporation, urethane resin
· UA-368: product name "PERMARIN (registered trademark) UA-368", manufactured by Sanyo Chemical Industries, Ltd., urethane resin
· UA-200: product name "PERMARIN (registered trademark) UA-200", manufactured by Sanyo Chemical Industries, Ltd., urethane resin
· WLS-201: product name "HYDRAN (registered trademark) WLS-201", manufactured by DIC Corporation, urethane resin
· W-6061: product name "TAKELAC (registered trademark) W-6061", manufactured by Mitsui Chemicals, Inc., urethane resin
· 500M: product name "SUPERFLEX (registered trademark) 500M", manufactured by DKS Co. Ltd., urethane resin

### Surfactant

· E1010: product name "OLFINE (registered trademark) E1010", manufactured by Nissin Chemical Co., Ltd., acetylene glycol-based surfactant

A breaking elongation of the resin particles in each table was measured as follows.
The resin particles were applied onto a silicone resin sheet such that a film thickness after drying was set to 400 µm, drying was carried out at a heating temperature of 120°C for 15 minutes, and then the resin film was peeled off from the silicone resin sheet to obtain a resin film. The obtained resin film was cut into a rectangle having a width of 2 cm and a length of 4 cm to produce a resin film test piece. Using the produced resin film test piece, a breaking elongation and a tensile strength were measured. In the measurement, a Tensilon universal tester RTC-1225A (manufactured by ORIENTEC CO., LTD.) was used. Using the above-described tester, the resin film test piece was stretched and pulled at a measurement temperature of 20°C and a measurement speed of 150 mm/min, and a length (breaking length) until breaking was measured. A proportion (%) of the breaking length to the original length of the resin film test piece was defined as the breaking elongation.

### 3.1.2. Preparation of non-white ink composition

Each component was put into a container to have the following formulation, mixed and stirred with a magnetic stirrer for 2 hours, and then filtered through a membrane filter having a pore diameter of 5 µm to obtain a non-white ink composition used in each of Examples and each of Comparative Examples. The following "WLS-201" and "E1010" are the same as those described in "3.1.1. Preparation of white ink composition". Numerical values in the tables represent a content. In addition, the content of "WLS-201" in the table represents a concentration of solid contents.

Pigment Blue 15 (3 dispersion liquid)
4.0% by mass

| | |
|---|---|
| WLS-201 | 6.0% by mass |
| Glycerin | 8.0% by mass |
| Ethylene glycol | 7.0% by mass |
| 1,2-Hexanediol | 1.0% by mass |
| KOH | 0.2% by mass |
| Triethanolamine | 1.0% by mass |
| E1010 | 0.5% by mass |
| Water | Remainder |

### 3.2. Preparation of treatment liquid composition

Each component was put into a container to have the formulation of Table 1 (FIG. 5) to Table 3 (FIG. 7), mixed and stirred with a magnetic stirrer for 2 hours, and then filtered through a membrane filter having a pore diameter of 5 µm to obtain a treatment liquid composition used in each of Examples and each of Comparative Examples. Numerical values in the tables represent a content. In addition, the content of the particles in the table represents the effective component concentration.

Supplementary description will be made on abbreviations and other product names shown in Tables 1 to 3.

### Particles containing organopolysiloxane

· K-45: product name "HYSOFTR (registered trademark) K-45", manufactured by MEISHIN CHEMICAL INDUSTRY CO., LTD., dimethyl silicone
· POLON-MF-14: product name, manufactured by Shin-Etsu Chemical Co., Ltd., amine-modified silicone emulsion
· X-51-1264: product name, manufactured by Shin-Etsu Chemical Co., Ltd., epoxy-modified silicone emulsion

### Particles not containing organopolysiloxane

· DCOM35-6: product name, manufactured by Takamatsu Oil & Fat Co., Ltd., special polyester resin

### 3.3. Evaluation method

### 3.3.1. Production of printed material

### Pretreatment

100% cotton black cloth or 100% polyester black cloth was padded with a pre-treatment liquid obtained by diluting 20% of calcium nitrate tetrahydrate (Ca: 17%) using a padding method such that the squeezing rate was 60%, and dried at 100°C for 2 minutes to obtain a pre-treated fabric.

### Settings during printing

Printing was performed using a device modified from ML-8000 (manufactured by Seiko Epson Corporation). A resolution during the printing was set to 1200 dpi × 1200 dpi, and an amount of ink applied during the printing at a duty of 100% was set to 24.3 mL/m².

### Printing method (only white)

The above-described pre-treated fabric was printed with the white ink composition at a duty of 200%. The treatment liquid composition was further printed on the fabric on which the white ink composition was printed at a duty of 50%, and then heated at 160°C or 140°C for 3 minutes using an oven. Hereinafter, the printed material in which only the white ink composition was printed is referred to as "white printed material".

### Printing method (color)

The above-described pre-treated fabric was printed with the white ink composition at a duty of 200%. The non-white ink composition was printed on the fabric on which the white ink composition was printed at a duty of 100%. The treatment liquid composition was further printed on the fabric on which the non-white ink composition was printed at a duty of 50%, and then heated at 160°C or 140°C for 3 minutes using an oven. Hereinafter, the printed material in which the non-white ink composition was further printed on the white ink composition is referred to as "color printed material".

### 3.3.2. Evaluation of fabric hand

Fabric hand of the white printed material produced in each of Examples and each of Comparative Examples was evaluated by sensory evaluation. Specifically, any five evaluators were asked to answer "not inferior to the original fabric hand of the fabric" or "the printed fabric was rough and the original fabric hand of the fabric was impaired", and the evaluation was performed according to the following criteria.

The evaluation criteria were as follows, and the evaluation results are shown in Tables 1 to 3. It can be said that favorable effects could be obtained in the evaluations of A to C.

### Evaluation criteria

A: Five evaluators responded that "the texture was comparable to the original texture of the fabric".
B: Three or four evaluators responded that "the texture was comparable to the original texture of the fabric".
C: One or two evaluators responded that "the texture was comparable to the original texture of the fabric".
D: No evaluators responded that "the texture was comparable to the original texture of the fabric".

### 3.3.3. Rub fastness

Rub fastness of the color printed material produced in each of Examples and each of Comparative Examples was tested by a wet test method according to ISO 105-X12.

The evaluation criteria were as follows, and the evaluation results are shown in Tables 1 to 3. It can be said that favorable effects could be obtained in the evaluations of A to C.

### Evaluation criteria

A: Grade 4 or higher
B: Grade 3
C: Higher than Grade 2 and Lower than Grade 3
D: Grade 2 or lower

It should be noted that "A^{~}B" in Tables 1 to 3 indicates an intermediate level of Grade 3 and Grade 4.

### 3.3.4. Evaluation of continuous printing stability

For the textile printing ink jet ink composition produced in each of Examples and each of Comparative Examples, a nozzle check was performed after performing continuous printing for 1 hour at a setting of a duty of 100%, and the number of nozzles in which a breakage occurred was measured. The number of tests in each example was set to 5, and the evaluation was performed by the average number.

The evaluation criteria were as follows, and the evaluation results are shown in Tables 1 to 3.
Even in the evaluation of D, it was sufficient for practical use.

### Evaluation criteria

A: less than 0.5 nozzles
B: 0.5 nozzles or more and less than 1 nozzle
C: 1 nozzle or more and less than 2 nozzles
D: 2 nozzles or more

### 3.3.5. Evaluation of white in white portion

For the white printed material produced in each of Examples and each of Comparative Examples, an L* value was measured using a colorimeter GretagMacbeth Spectrolino (manufactured by X-Rite, Inc.), and whiteness was measured.

The evaluation criteria were as follows, and the evaluation results are shown in Tables 1 to 3.

### Evaluation criteria

A: L* was 80 or more.
B: L* was 75 or more.
C: L* was 70 or more.
D: L* was less than 70.

### 3.4. Evaluation results

The following matters were found from Examples and Comparative Examples.

In Examples according to the composition set containing a textile printing ink jet ink composition and a treatment liquid composition, in which the textile printing ink jet ink composition contains a white pigment, resin particles, and water, the resin particles include resin particles having a breaking elongation of 400% or more and 1000% or less, a content of the resin particles is 6.5% by mass or more with respect to the total amount of the textile printing ink jet ink composition, and the treatment liquid composition contains particles containing an organopolysiloxane and water, favorable results were exhibited in the evaluation items of the fabric hand and the rub fastness of the printed material.

On the other hand, in Comparative Examples in which the above-described conditions were not satisfied, deteriorated results were obtained in any of the evaluation items of the fabric hand and the rub fastness of the printed material.

By comparing Example 1 with Comparative Example 1, in the ink jet textile printing recording, the printed material exhibited favorable fabric hand by using the treatment liquid composition.

By comparing Example 1 with Comparative Example 2, the printed material exhibited favorable fabric hand by containing the particles containing an organopolysiloxane in the treatment liquid composition.

By comparing Example 1 with Comparative Examples 3 and 4, the printed material exhibited favorable fabric hand and favorable rub fastness by containing the resin particles in the textile printing ink jet ink composition and containing the resin particles having a breaking elongation of 400% or more and 1000% or less.

By comparing Example 1 with Comparative Example 5, the printed material exhibited favorable rub fastness by containing the resin particles in the textile printing ink jet ink composition and having a content of the resin particles of 6.5% by mass or more with respect to the total amount of the textile printing ink jet ink composition.

From Examples 1 to 4, when the textile printing ink jet ink composition contained the resin particles and contained the resin particles having a breaking elongation in a predetermined range, the printed material exhibited favorable fabric hand and exhibited favorable rub fastness.

From Examples 5 to 9, when the textile printing ink jet ink composition contained the resin particles and the content of the resin particles was in a predetermined range, the printed material exhibited favorable rub fastness. In addition, the continuous printing stability during printing was also improved.

From Examples 10 to 13, when the textile printing ink jet ink composition contained the white pigment and the content of the white pigment was in a predetermined range, the whiteness in the white portion of the printed material was improved, and favorable rub fastness was exhibited.

From Examples 14 to 19, even when the treatment liquid composition contained the particles containing various organopolysiloxanes, the printed material exhibited favorable fabric hand.

From Example 20, the printed material exhibited favorable fabric hand by including the heating step in the production of the printed material.

From Example 21, the printed material using the textile printing ink jet ink composition and the treatment liquid composition exhibited favorable fabric hand regardless of the type of the fabric.

The present disclosure is not limited to the above-mentioned embodiment, and various modifications are possible. For example, the present disclosure includes a configuration substantially the same as the configuration described in the embodiment, for example, a configuration having the same function, method, and result, or a configuration having the same object and effect. In addition, the present disclosure includes configurations in which non-essential parts of the configuration described in the embodiments are replaced. In addition, the present disclosure includes configurations that achieve the same operational effects or configurations that can achieve the same objects as those of the configurations described in the embodiments. In addition, the present disclosure includes configurations in which a known technology is added to the configurations described in the embodiments.

The following contents are derived from the above-described embodiments and modification examples.

The composition set contains
a textile printing ink jet ink composition; and
a treatment liquid composition,
in which the textile printing ink jet ink composition contains a white pigment, resin particles, and water,
the resin particles include resin particles having a breaking elongation of 400% or more and 1000% or less,
a content of the resin particles is 6.5% by mass or more with respect to the total amount of the textile printing ink jet ink composition, and
the treatment liquid composition contains particles containing an organopolysiloxane and water.

According to the composition set, the textile printing ink jet ink composition contains the resin particles having a breaking elongation of 1000% or less, and the content of the resin particles is 6.5% by mass or more, whereby the rub fastness can be improved. Furthermore, when a large amount of such resin particles having the breaking elongation is contained, the fabric hand of the printed material may deteriorate. On the other hand, by using the treatment liquid composition containing the particles containing an organopolysiloxane and containing the resin particles having a breaking elongation of 400% or more in the textile printing ink jet ink composition, the fabric hand of the printed material can be improved, and both the favorable fabric hand and the favorable rub fastness can be achieved.

In the above-described composition set, the organopolysiloxane may be a nonionic silicone.

According to the composition set, the ejection is stabilized and the nozzle clogging is reduced when recording by the ink jet method, whereby the continuous printing stability is improved. In addition, yellowing of the image of the printed material is reduced.

In the above-described composition set, the organopolysiloxane may be dimethyl silicone.

According to the composition set, the ejection is stabilized, and the continuous printing stability is improved.

In the above-described composition set, a content of the white pigment is 7.0% by mass or more and 13.0% by mass or less with respect to the total amount of the textile printing ink jet ink composition.

According to the composition set, the color developing property of the printed white portion is improved. In addition, when the white ink composition is printed as a base for printing the non-white ink composition, hiding property of the base is improved, and a clearer image can be formed.

In the above-described composition set, a content of the resin particles with respect to a content of the white pigment may be 0.5 or more and 1.5 or less in terms of a mass ratio.

According to the composition set, the rub fastness of the printed material is improved.

In the above-described composition set, a content of the particles containing an organopolysiloxane may be 5.0% by mass or more and 15.0% by mass or less with respect to the total amount of the treatment liquid composition.

According to the composition set, the continuous printing stability is improved when recording by the ink jet method.

In the above-described composition set, a content of the particles containing an organopolysiloxane with respect to the total amount of the treatment liquid composition on a mass basis may be larger than a content of the resin particles with respect to the total amount of the textile printing ink jet ink composition on a mass basis.

According to the composition set, the rub fastness of the printed material is improved.

In the above-described composition set, the content of the resin particles may be 11.5% by mass or less with respect to the total amount of the textile printing ink jet ink composition.

According to the composition set, the printed material exhibits favorable fabric hand.

In the above-described composition set, the resin particles may include resin particles having a breaking elongation of 670% or more and 990% or less.

According to the composition set, a hardness of the resin is suitable, and the printed material exhibits more favorable fabric hand.

In the above-described composition set, a content of a coloring material in the treatment liquid composition may be 0.1% by mass or less with respect to the total amount of the treatment liquid composition.

According to the composition set, the color development of the printed material can be further improved when further recording with the non-white ink composition.

In the above-described composition set, a content of the particles containing an organopolysiloxane may be 90.0% by mass or more with respect to the total solid content in the treatment liquid composition.

According to the composition set, the content of the organopolysiloxane is suitable, the ejection during recording by the ink jet method is further stabilized, and the continuous printing stability is improved. In addition, the color development of the printed material is further improved when further recording with the non-white ink composition.

The above-described composition set may further contain a non-white ink jet ink composition that contains a non-white pigment, resin particles, and water.

According to the composition set, a color image using the non-white ink jet ink composition can be printed.

In the above-described composition set, the treatment liquid composition may be ejected and used by an ink jet method.

According to the composition set, the treatment liquid composition can be uniformly attached to the fabric.

The ink jet textile printing recording method includes an ink attachment step of attaching the above-described textile printing ink jet ink composition to a fabric by an ink jet method, and a treatment liquid attachment step of attaching the above-described treatment liquid composition to the fabric after the ink attachment step.

According to the ink jet textile printing recording method, a printed material exhibiting favorable fabric hand and favorable rub fastness can be obtained.

In the treatment liquid attachment step of the above-described ink jet textile printing recording method, the treatment liquid composition may be ejected by an ink jet method.

According to the ink jet textile printing recording method, the treatment liquid composition can be more uniformly ejected, and the treatment liquid composition can be more uniformly attached to the fabric.

The above-described ink jet textile printing recording method may further include a drying step of drying the fabric after the treatment liquid attachment step by heating, in which a heating temperature is 160°C or higher.

According to the ink jet textile printing recording method, the printed material exhibits favorable color development.

In the above-described ink jet textile printing recording method, the fabric may be colored cotton cloth.

According to the ink jet textile printing recording method, favorable color development is exhibited when printing the white ink composition. In addition, when the white ink composition is printed as a base and an image is formed using the non-white ink composition, a colored image exhibiting favorable color development is obtained.

## Claims

1. A composition set comprising:
a textile printing ink jet ink composition; and
a treatment liquid composition, wherein
the textile printing ink jet ink composition contains a white pigment, resin particles, and water,
the resin particles include resin particles having a breaking elongation of 400% or more and 1000% or less,
a content of the resin particles is 6.5% by mass or more with respect to a total amount of the textile printing ink jet ink composition, and
the treatment liquid composition contains particles containing an organopolysiloxane and water.

2. The composition set according to claim 1, wherein
the organopolysiloxane is a nonionic silicone.

3. The composition set according to claim 1, wherein
the organopolysiloxane is dimethyl silicone.

4. The composition set according to claim 1, wherein
a content of the white pigment is 7.0% by mass or more and 13.0% by mass or less with respect to the total amount of the textile printing ink jet ink composition.

5. The composition set according to claim 1, wherein
a content of the resin particles with respect to a content of the white pigment is 0.5 or more and 1.5 or less in terms of a mass ratio.

6. The composition set according to claim 1, wherein
a content of the particles containing an organopolysiloxane is 5.0% by mass or more and 15.0% by mass or less with respect to a total amount of the treatment liquid composition.

7. The composition set according to claim 1, wherein
a content of the particles containing an organopolysiloxane with respect to a total amount of the treatment liquid composition on a mass basis is larger than a content of the resin particles with respect to the total amount of the textile printing ink jet ink composition on a mass basis.

8. The composition set according to claim 1, wherein
the content of the resin particles is 11.5% by mass or less with respect to the total amount of the textile printing ink jet ink composition.

9. The composition set according to claim 1, wherein
the resin particles include resin particles having a breaking elongation of 670% or more and 990% or less.

10. The composition set according to claim 1, wherein
a content of a coloring material in the treatment liquid composition is 0.1% by mass or less with respect to a total amount of the treatment liquid composition.

11. The composition set according to claim 1, wherein
a content of the particles containing an organopolysiloxane is 90.0% by mass or more with respect to a total solid content in the treatment liquid composition.

12. The composition set according to claim 1, further comprising:
a non-white ink jet ink composition that contains a non-white pigment, resin particles, and water.

13. The composition set according to claim 1, wherein
the treatment liquid composition is ejected and used by an ink jet method.

14. An ink jet textile printing recording method comprising:
attaching the textile printing ink jet ink composition according to claim 1 to a fabric by an ink jet method; and
attaching the treatment liquid composition according to claim 1 to the fabric after the attachment of the textile printing ink jet ink composition.

15. The ink jet textile printing recording method according to claim 14, wherein
in the attachment of the treatment liquid composition, the treatment liquid composition is ejected by an ink jet method.

16. The ink jet textile printing recording method according to claim 14, further comprising:
drying the fabric after the attachment of the treatment liquid composition by heating, wherein
a heating temperature is 160°C or higher.

17. The ink jet textile printing recording method according to claim 14, wherein the fabric is colored cotton cloth.
